(19) Europäisches Patentamt European Patent Office Office européen des brevets

(11) EP 1 783 663 A2

## (12) EUROPEAN PATENT APPLICATION

(43) Date of publication:
09.05.2007 Bulletin 2007/19

(51) Int Cl.:
*G06K 9/64* (2006.01)

(21) Application number: 06022163.7

(22) Date of filing: 23.10.2006

(84) Designated Contracting States:
AT BE BG CH CY CZ DE DK EE ES FI FR GB GR HU IE IS IT LI LT LU LV MC NL PL PT RO SE SI SK TR
Designated Extension States:
AL BA HR MK YU

(30) Priority: 04.11.2005 JP 2005321620

(71) Applicant: OMRON CORPORATION
Kyoto-shi, Kyoto 600-8530 (JP)

(72) Inventor: Komatsu, Yukihiro,
c/o Omron Corp., 801,Minamifu-
Shimogyo-ku, Kyoto-shi, Kyoto 600-8530 (JP)

(74) Representative: Kilian, Helmut
Wilhelms, Kilian & Partner
Patentanwälte
Eduard-Schmid-Strasse 2
81541 München (DE)

(54) **Object recognizing method, program and storage medium for recognizing object, and object recognizing apparatus**

(57) A coordinate (X,Y) and a rotational angle $\Theta$ of a reference point O of a recognition object are computed in each edge point E, extracted on a process target image, using pieces of information on previously registered N model edge points. Votes of $\sin\Theta$ and $\cos\Theta$ are given for the coordinates (X,Y) of two-dimensional voting planes S, and C, and cumulative values for which the votes are given are computed in each coordinate. When the voting process is ended, correspondence is performed to the cumulative values of each plane in each coordinate to determine the sum of squares $(S(X,Y))^2 + (C(X,Y))^2$ of the cumulative values, and the vote of the sum of squares $(S(X,Y))^2 + (C(X,Y))^2$ is given for a voting plane P. A coordinate $(X_P, Y_P)$ in which the maximum value is obtained is extracted in the voting plane P, and the coordinate $(X_P, Y_P)$ is recognized as the coordinate of the reference point O. The rotational angle is computed using the cumulative values in the coordinates $(X_P, Y_P)$ of the planes S and C.

Fig. 3

**Description**

BACKGROUND OF THE INVENTION

1. Field of the Invention

The present invention relates to an image processing technology which recognizes a position or an attitude of a recognition object having an outline shape corresponding to a previously registered model in a process target image. Particularly the invention relates to the technology which recognizes the position and a rotational angle of the recognition object by performing a process called "generalized Hough transform" using plural edge points and edge directions included in the process target image.

2. Description of the Related Art

In the conventional generalized Hough transform, a reference point of the recognition object is specified with a reference image previously including the model, and pieces of information indicating the edge direction and an orientation and a distance with respect to the reference point are registered in each of the plural edge point (hereinafter referred to as "model edge point") constituting the model outline. During measurement, for each of the edge point on the process target image, the plural values are computed with respect to a coordinate and a rotational angle of the reference point using the pieces of registration information of each model edge point, and a vote of each value is given for a virtual three-dimensional space (voting space). Then, the coordinate of the reference point of the object and the rotational angle of the object are recognized in the process target image based on the coordinate which wins the most votes.

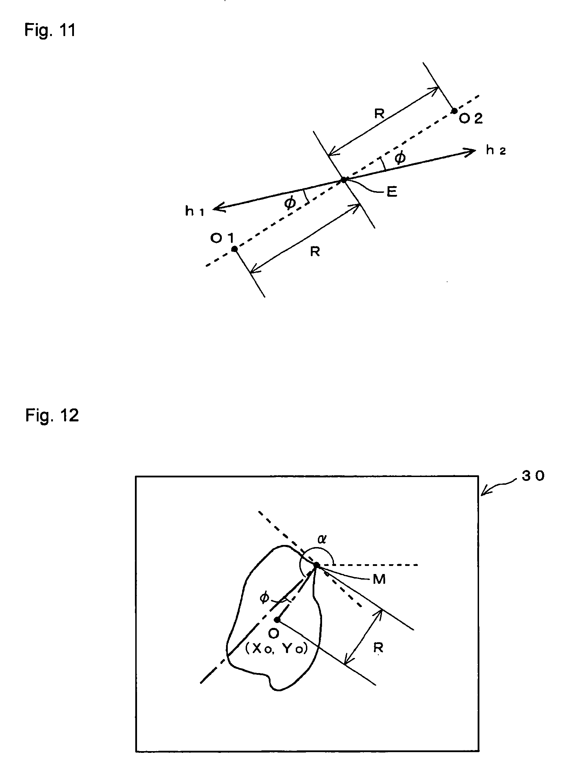

The above process will specifically be described with reference to FIGS. 12 to 16. FIG. 12 shows registration information of an arbitrary model edge point on the reference image. In FIG. 12, the numeral 30 designates a reference image, a point O is the reference point of the model, and a point M (coordinate is set at $(X_0,Y_0)$) is the model edge point. Although the center point of the model is frequently used as the reference point O, an arbitrary point specified by a user may be set at the reference point O.

An angle $\alpha$ indicates the edge direction of the model edge point M. In this case, $\alpha$ is an angle formed by a direction (density gradient direction) of a normal in the model edge point M and a positive direction of an X-axis (horizontal axis). An angle $\phi$ indicates an orientation of the model edge point M with respect to the reference point O. In this case, $\phi$ is an angle in which a line segment OM is viewed counterclockwise from the normal. The sign R designates a distance from the reference point O to the model edge point M.

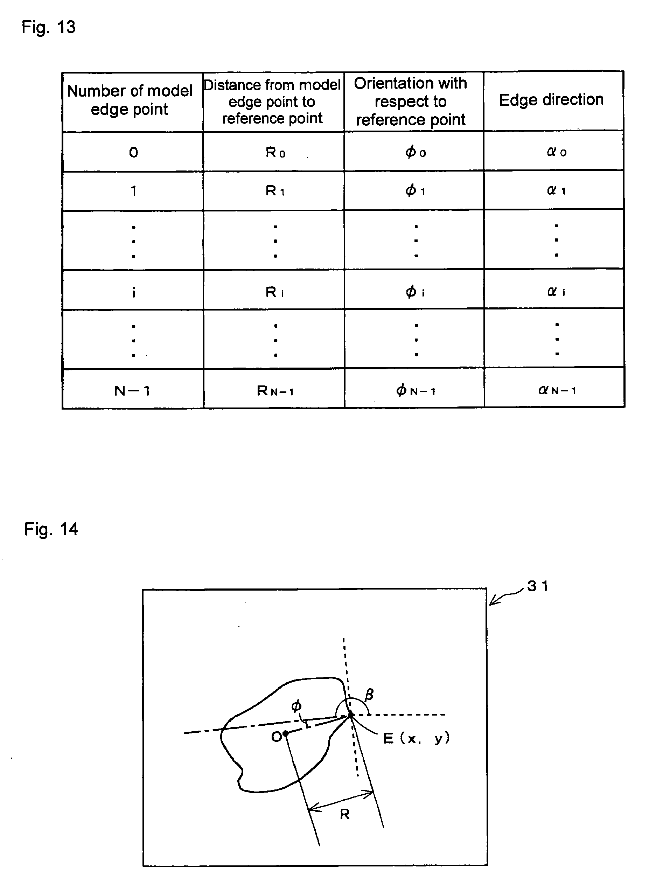

In the conventional generalized Hough transform, the angle $\alpha$, the angle $\phi$, and the distance R are determined for each model edge point on the reference image, and the determined values are edited and registered in a table shown in FIG. 13.

FIG. 14 shows an example of the process target image. In FIG. 14, the numeral 31 designates a process target image, and a point E is one edge pointing the process target image. An angle $\beta$ indicates the edge direction of the edge point E, and the angle $\beta$ is determined by the same method as the angle $\alpha$. When the edge point E corresponds to the model edge point M, even if the edge direction is changed by the rotation of the recognition object, the angle $\phi$ and distance R which express a relationship with the reference point O should be similar to those of the model edge point M. Therefore, the coordinated of the reference point O can be specified using the coordinate (x,y) and angle $\beta$ of the edge point E and the registered angle $\phi$ and distance R. At this point, a difference $\Theta$ ($\Theta=\beta-\alpha$) between the angle $\beta$ indicating the edge direction and the registered angle $\alpha$ corresponds to the rotational angle on the process target image.

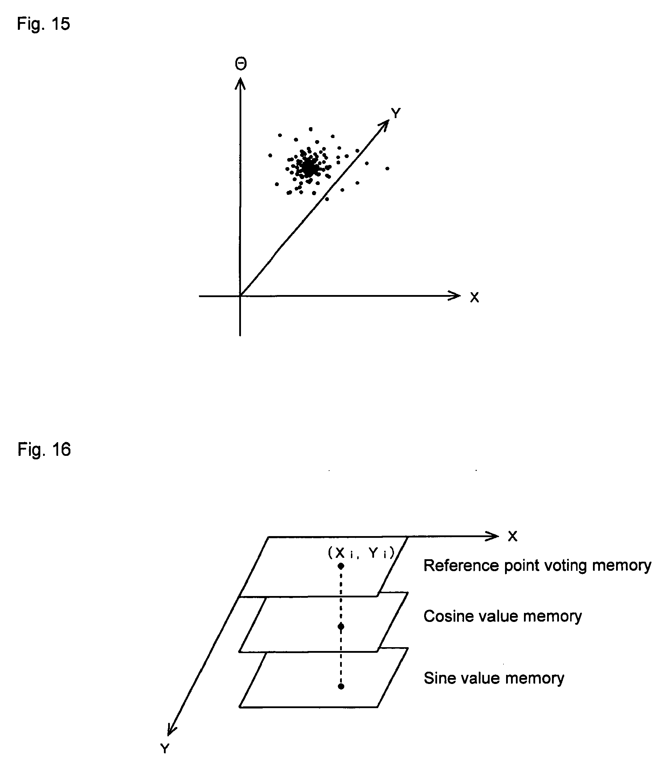

However, a correlation between the edge point and the model edge point is not unknown on the process target image 31. In addition, there is a possibility of including an edge point of a noise component in the process target image 31. Therefore, in the conventional generalized Hough transform, N model edge points registered in the table of FIG. 13 are caused to correspond sequentially to each edge point E on the process target image 31, the coordinate (X,Y) and rotational angle $\Theta$ of the reference point O are determined by applying the registration information on the corresponding model edge point to the edge point E. Every time a set of (X,Y,$\Theta$) is computed, one vote is given for one point in the three-dimensional voting space shown in FIG. 15, which is expressed by the set of (X,Y,$\Theta$). As a result, because the coordinate corresponding to the correct reference point O and rotational angle $\Theta$ wins the most votes in the voting space, the coordinate of the reference point O and the rotational angle of the object can be determined by extracting the coordinate which wins the most votes.

On the other hand, instead of the method of setting the three-dimensional voting space, there is proposed a method of recognizing the coordinate of the reference point O and the rotational angle of the object by performing a voting process in which plural two-dimensional voting planes are used (refer to, for example, Fumihiko Saito, "Extraction of rotational graphic by generalized Hough transform with two-dimensional parameter space", Journal of the Institute of Image electronics Engineers of Japan, vol. 25, No. 2, p.130-137 (April, 1996) (hereinafter referred to as "non-patent document").

FIG. 16 schematically shows the voting process disclosed in the non-patent document. A memory (reference point voting memory) for performing the vote of the coordinate (X,Y) of the reference point O,a memory (cosine value memory and sine value memory) for performing the vote of a cosine value and a sine value of the rotational angle $\Theta$, and the like are set in the method disclosed in the non-patent document. The coordinate is incremented by one in the reference point voting memory corresponding to the computed coordinate $(X_i, Y_i)$, and values of $\cos\Theta$ and $\sin\Theta$ are stored in the same coordinate of the cosine value memory and sine value memory. The number of times, in which the votes of the values having the small differences are continuously given for the same coordinate, is determined by comparing the values of $\cos\Theta$ and $\sin\Theta$ to the values previously stored in the same coordinate. When the number of times is not lower than a predetermined value R, it is judged that the voted value reflects the correct $(X,Y,\Theta)$.

In the conventional generalized Hough transform, a memory having a large capacity is required because of the setting of the three-dimensional voting space. When a memory size is increased, a time necessary to read or write data becomes lengthened, which results in a problem that the process requires long time.

On the other hand, in the method disclosed in the non-patent document, the process in which the two-dimensional plane is used can largely reduce the memory capacity to achieve speed-up of the process. However, there is a risk of generating an error, unless the number of continuous voting times R for judging the correct vote is set at an appropriate value. For example, when many noises are included in the process target image in setting the value of R at a value lower than the optimum value, even for the noise, there is a possibility of generating the number of continuous voting times more than R times. On the contrary, when the value of R is set at a value larger than the optimum value, the number of continuous voting times may not reach the R times even at the edge point of recognition object.

In view of the foregoing, an object of the invention is to enhance the speed-up and accuracy of the object recognizing process with the generalized Hough transform by performing the voting process less subject to the noise while the memory capacity for the voting process can be reduced.

SUMMARY OF THE INVENTION

In the specification, the term "edge point" shall mean a point constituting the edge on the image, and the edge point shall indicate a pixel where a gradient of a change in given variable exceeds a predetermined value, when the gradient of the change in given variable in a focused pixel is determined based on the given variable of the focused pixel and surrounding pixels for the given variable in one or plural variables defining pixel information. A point constituting an outline after a line tinning process shall also include a concept of the edge point.

For example, in the case where the target is a monochrome gray-scale image, the pixel whose density gradient exceeds a predetermined value can be extracted as the edge point. For example, the pixel in which the gradient of the change exceeds a predetermined value for at least one variable in each pieces of pixel information defined by three color variables (for example, R, G, and B) which are independent of one another can be extracted as the edge point in the case where the target is a color image. Examples of the variable include lightness, hue, intensity of each of R, G, and B, one of three variables expressing another color, and color information obtained therewith.

In an object recognizing method of the present invention, plural model edge points constituting the model outline are individually focused on while a reference point coordinate is set using a reference image including a having a predetermined outline shape, a direction of a change in predetermined variable in a focused pixel is determined for the predetermined variable in one or plural variables defining pixel information based on the predetermined variable with respect to the focused pixel and pixels around the focused pixel, and information indicating an edge direction which is of a direction corresponding to the change in direction, information indicating an orientation with respect to the edge direction of the reference point, and information indicating a distance from the reference point (for example, $\alpha$, $\phi$, and R shown in FIG. 12) are registered.

Furthermore, when a gradient of the change in predetermined variable in the focused pixel is determined for the predetermined variable in the one or the plural variables defining the pixel information based on the predetermined variable with respect to the focused pixel and pixels around the focused pixel, an image including an edge point is set at a process target in the case where the focused pixel having the gradient larger than a predetermined value is set at the edge point, a coordinate and an edge direction of the edge point are determined for the plural edge points on the process target image, when the plural model edge points are assumed to correspond to the edge points respectively, a process of computing the reference point coordinate defined from the registration information and an angle indicating a difference between the edge direction of the edge point and the edge direction of the model edge point is performed, a voting process is performed based on computed each value, and a rotational angle of an outline pattern is recognized based on the model and a position of the outline pattern corresponding to the model using the result of the voting process.

The information indicating the edge direction is not limited to the angle $\alpha$ indicating the normal direction of the edge point, but the information may be an angle indicating the direction orthogonal to the normal direction of the edge point, i.e., a tangent direction of the edge point. "The outline pattern corresponding to the model" is not limited to the pattern having the same outline as the model, but "the outline pattern corresponding to the model" may be a part of the outline pattern of the model.

The object recognizing method of the invention has the following features for the voting process and the object recognition process. In the voting process, a vote of a vector corresponding to the angle computed along with the coordinate is given to the reference point coordinate determined in each model edge point for each edge point on the process target image, and numerical information indicating a composite vector of the voted vector is computed in each coordinate for which the vote is given. Further, in the object recognition process, the coordinate in which a length of the composite vector exceeds a predetermined value, or the coordinate corresponding to a predetermined number of vectors in the case where the composite vector are checked in the descending order of the length is extracted from the coordinates for which the vote is given using the numerical information according to ends of the voting process and the process of computing the numerical information indicating the composite vector, and the position and rotational angle of the outline pattern are recognized using the extraction result.

For example, in the case where the vector corresponding to the rotational angle is decomposed in two directions, the vector is expressed by the vector components. Instead of the vector components, the vector may be expressed by the sine value ($\sin\Theta$) and the cosine value ($\cos\Theta$) of the rotational angle.

In the voting process, the array (for example, $\sin\Theta$ (X,Y) and $\cos\Theta$ (X,Y)) in which the cumulative value of the numerical information is stored while the reference point coordinate is set at the argument is set to add the value based on the computed rotational angle $\Theta$ to the numerical information corresponding to (X,Y) in the array every time the coordinate (X, Y) and the rotational angle $\Theta$ are computed.

According to the voting process, in the coordinate of the correct reference point in the coordinates which become the voting target, it is thought that the direction of the vector in which the vote is given has the extremely small dispersion. On the other hand, in other coordinates (the coordinate computed when the faulty model edge point corresponds or the coordinate computed from the noise edge point), there is a high possibility that the direction of the vector in which the vote is given has the large dispersion. Accordingly, when the vectors corresponding to the rotational angles for which the vote is given are composed, it is thought that the composite vector in the coordinate of the correct reference point becomes longer than that of the composite vector in other coordinates. Therefore, the length of the composite vector is previously determined in the case where the predetermined vectors orientated toward the same direction are composed, and the composite vector is set at the threshold, so that the coordinate in which the length of the composite vector exceeds the threshold can be extracted to determine the correct coordinate of the reference point with no influence of the noise. The rotational angle of the recognition object can also be determined with high accuracy from a summation of the vectors in which the votes are given for the coordinate. Desirably the extracted coordinate is set at a coordinate in which the length of composite vector exceeds the threshold and becomes the maximum value.

The voting process can be performed not by the three-dimensional voting space such as the conventional generalized Hough transform, but by the two-dimensional voting plane. Unlike the non-patent reference, it is not necessary to set the many voting planes, so that the memory capacity can largely be reduced to achieve the speedup of the computation.

Desirably the vector composition in the voting process is performed every time the vote of the vector is performed. Alternatively, for example, the vector in which the vote is given for the coordinate may be accumulated in each coordinate to finally perform the vector composition process. In the case where the recognition object can be restricted to the one recognition object, the coordinate in which the length of the composite vector becomes the maximum is extracted from the coordinates for which the votes are given, and the position and rotational angle of the outline pattern may be recognized based on the extracted coordinate.

The position of the outline pattern can be set at the coordinate of the reference point. Alternatively, for example, the coordinate of the point which is separated from the reference point by a predetermined distance may be set at the position of the outline pattern. Alternatively, the coordinate of the edge point having a particular relationship with the reference point is determined based on the registration information on the model edge point, and the determined coordinate may be set at the position of the outline pattern. On the other hand, the angle of the outline pattern can be determined from the composite vector in the coordinate in which the length of the composite vector exceeds the predetermined value. For example, the angle formed by the composite vector and the horizontal direction (X-axis direction) can be determined.

In a preferred mode of the object recognizing method, in the voting process, cosine and sine cumulative values of the rotational angle are determined in each coordinate for which the vote is given, and a sum of squares of the two kinds of cumulative values is computed as the length of the composite vector. In another preferred mode of the object recognizing method, in the voting process, numerical information indicating an orientation and the length of each vector is determined in each coordinate for which the vote is given when the vector corresponding to the rotational angle is decomposed in horizontal and vertical directions, and a sum of squares of the two kinds of cumulative values is computed as the length of the composite vector.

According to the above two modes, the two kinds of pieces of numerical information are updated every time the coordinate and rotational angle of the reference point are computed, and the coordinate and rotational angle of the correct reference point can be determined by the sum of squares of the final pieces of numerical information.

The following modes A to E can also be set in the object recognizing method of the invention

(Mode A)

In the mode A, a step a of determining a corresponding point on the process target image based on the tentative position and tentative rotational angle and a step b of computing the reference point coordinate and the angle indicating the difference in the edge direction for the edge point included in a local region including the corresponding point using the registration information on the model edge point are performed for each model edge point, after a tentative position and a tentative rotational angle of the object are determined based on the numerical information indicating composite vector. Then, the vectors indicating the rotational angles are composed while the reference point coordinates determined by the steps a and b are averaged for each model edge point, and the position and rotational angle of the object are recognized based on the coordinate of the averaged reference point and the angle indicating the composite vector.

In the mode A, the coordinate of the corresponding point determined in the step a corresponds to the coordinate of the case where the model edge point on the reference image is moved based on the tentative position and the tentative rotational angle, but the edge point may not always exists in the coordinate. In the step b, the local region (mask) is set around the corresponding point, the model edge point used to compute the corresponding point is caused to correspond to each edge point included in the local region to compute the coordinate of the reference point and the angle indicating the difference of the edge direction. Because the edge points in the local region correspond to the model edge points or the edge points in the local region have a possibility that the edge points are a point extremely close to the model edge points, it is thought that the computed coordinate or angle has the extremely small dispersion. Therefore, the coordinate of the real reference point can accurately be determined by averaging the coordinates of the reference points. Furthermore, the rotational angle can accurately be determined by the composite vector of the angle which is determined along with the coordinate of each reference point.

However, when the noise is included in the process target region including the corresponding point, there is a possibility that the average values of the coordinate and angle become incorrect due to the value computed from the noise. Accordingly, when the difference more than a predetermined value is recognized between the computed coordinate and angle and the coordinate and rotational angle which are recognized by the composite vector, it is desirable to exclude the computed value having the difference more than a predetermined value from the computation target of the average value. Instead of the average value computation, the vote of the vector corresponding to the coordinate and angle determined in the local region may be given for the voting plane in which the scale is fined compared with the voting process.

(Mode B)

In the mode B, after the position and rotational angle of the outline pattern are recognized based on the coordinate which is extracted using the numerical information indicating composite vector, a normalized correlation operation on which the position and rotational angle of the outline pattern are reflected is performed using one or plural gray-scale image models having outline shapes corresponding to the model.

For example, the mode B can be applied in recognizing the object having a pattern or color. Conventionally, in the case where the position and rotational angle of the object are determined using the normalized correlation operation, it is necessary that the plural gray-scale image models (produced by rotating the reference image model by a predetermined angle) be produced from the reference image to perform the search for the whole of the process target image for each model. On the contrary, according to the mode B, the position and rotational angle of the object are previously determined by the generalized Hough transform. Therefore, for example, the gray-scale image model is set at the position of the recognized object, and the normalized correlation operation is performed by correcting the rotation of the gray-scale image model based on the rotational angle, so that the process time necessary for the normalized correlation operation can be largely shortened. Furthermore, the search process can accurately be performed in the restricted process time.

(Mode C)

In the mode C, in the process of determining the reference point coordinate in each edge point on the process target image, each one of candidates of the reference point coordinate is computed in the registered orientation of the reference point with respect to the edge direction and a reversal orientation for each model edge point. For example, in the process target image 31 of FIG. 14, the coordinates of the points which are separated from the edge point E by the distance R are computed in the direction of the angle φ from the edge direction shown by the angle β and the reversal direction respectively.

According to the mode C, the position and angle of the object can be recognized by the voting process, in the case where the edge direction cannot uniquely be specified in the edge point such as the case where process target image is reversed to the reference image and the case where color image is set at the process target.

(Mode D)

In the mode D, after the reference point coordinate and the rotational angle in the edge direction are determined for each edge point on the reference image using the registration information on each model edge point on the condition that registration process is ended for each model edge point, the voting process and the process of computing the numerical information indicating the composite vector are performed. Then, the reference point is set at a different coordinate to perform the registration process for each model edge point again when the length of the composite vector indicated by the numerical information is shorter than a predetermined threshold in ending the vote for all the edge points.

For example, in the case where the outline shape of the recognition target object is a pattern which is symmetrical to a point, when the center point of the object is set at the reference point, the vote of the vector having the orientation toward the direction opposite the coordinate is given while the correct coordinate of the reference point is computed in the two edge points which are symmetrical to a point for the one model edge point. As a result, the composite vector corresponding to the correct reference point becomes shortened, which generates a possibility that the position and rotational angle of the object cannot correctly be recognized.

In the mode D, in order to deal with such problems, the computation process and voting process which are similar to those performed to the process target image are performed for the reference image using the registered information, when the registration process is ended for each model edge point. As a result, when the length of the obtained vector is lower than the predetermined threshold, the reference point is set to perform the registration process to each model edge point again. According to the processes, because the reference point fit to determine the position and rotational angle of the object can be set, the recognition process can accurately be performed irrespective of the shape of recognition object.

(Mode E)

In the mode E, plural points having the different coordinates are set at the reference point, the process of determining the reference point coordinate and the voting process are performed in each reference point for the process target image. For example, in the case where only the center point or gravity center of the model is set at the reference point, even if the object having the shape in which the plural outlines corresponding to the model overlap each other exists in the process target image, the reference point is extracted as one point in each shape corresponding to the model, and there is generated a possibility that the outline shape cannot correctly be recognized as the whole object.

On the contrary, according to the mode E, even if the center point or gravity center of the model is included in the reference point, other reference points are extracted in each outline corresponding to the model, so that the orientation or positional relationship of each outline can separately be discriminated based on the extraction result. Therefore, the outline shape can correctly be recognized as the whole object.

An object recognition process program of the present invention is a program for setting a function of recognizing a position of an outline pattern corresponding to a model having a predetermined outline shape and a rotational angle of the outline pattern with respect to the mode from a process target image to a computer having a function of individually focusing on plural model edge points constituting the model outline while setting a reference point coordinate using a reference image including a having a predetermined outline shape, of determining a direction of a change in predetermined variable in a focused pixel for the predetermined variable in one or plural variables defining pixel information based on the predetermined variable with respect to the focused pixel and pixels around the focused pixel, and of registering information indicating an edge direction which is of a direction corresponding to the change in direction, information indicating an orientation with respect to the edge direction of the reference point, and information indicating a distance from the reference point; and a function of setting an image including an edge point at a process target in the case where the focused pixel having the gradient larger than a predetermined value is set at the edge point, and of determining a coordinate and an edge direction of the edge point for the plural edge points on the process target image, when a gradient of the change in predetermined variable in the focused pixel is determined for the predetermined variable in the one or the plural variables defining the pixel information based on the predetermined variable with respect to the focused pixel and pixels around the focused pixel. The object recognition process program of the invention causes the computer to function as a candidate value computation device, a storage device, an information update device, an extraction device, and a recognition device.

The candidate value computation device computes the reference point coordinate defined in the case where each registered model edge point is assumed to correspond to the edge point and computes an angle indicating a difference between the edge direction of the edge point and the edge direction of the model edge point for the plural edge points on the process target image using registration information of each model edge point.

In the storage device, numerical information indicating a composite vector is stored when vectors corresponding to the angle computed by the candidate value computation device are composed in each coordinate. For example, in the case where the vector corresponding to the rotational angle is expressed by the sine and cosine values of the rotational angle, the two-dimensional array in which the cumulative values of the pieces of information on the sine and cosine values are stored while corresponding to the coordinate (X,Y) of the reference point functions as the storage device.

The information update device updates the numerical information, stored in the storage device, corresponding to the computed reference point coordinate using the computed angle every time the reference point coordinate and the angle are computed by the candidate value computation device. The extraction device extracts the coordinate in which a length of the composite vector exceeds a predetermined value or the coordinate corresponding to a predetermined number of vectors in the case where the composite vector are checked in the descending order of the length using the numerical information according to ends of processes performed by the candidate value computation device and information update device. The recognition device recognizes the position and rotational angle of the outline pattern using the extraction result performed by the extraction device.

According to the program of the invention, the object recognizing method can be performed on the condition that the setting of the reference point and the information on the plural model edge points are previously registered using the reference image.

In addition to the above functions, a storage medium in which the program of the invention is stored may include a program for setting a function of extracting the edge point on the process target image and a function of performing processes (such as measurement and judgment) after the position and angle of the outline pattern are recognized.

An object recognizing apparatus of the present invention includes an image input device which inputs an image including the edge point, a registration device which registers information indicating an edge direction, information indicating an orientation with respect to the reference point, and information indicating a distance from the reference point for plural model edge points constituting the model outline while setting a reference point coordinate using a reference image when the reference image including a model having a predetermined outline shape, a the candidate value computation device, the storage device, the information update device, the extraction device, and the recognition device.

In the above configuration, the devices except for the image input device are configured by the computer in which the program for executing the devices is set. However, the invention is not limited to the above configuration, but the devices may be configured by an integrated circuit such as IC. A part of the devices may be configured by the computer while other devices are configured by IC and the like.

According to the present invention, the voting process can be performed such that the number of votes on which the correct values of the reference point and rotational angle are reflected is strengthened while the number of votes caused by the noise and the error of correspondence of the model edge point is decreased. Therefore, the position and rotational angle of the object can accurately be determined with no influence of the noise. Furthermore, the speedup can be achieved in the recognition process because the memory capacity for the voting process is largely reduced.

BRIEF DESCRIPTION OF THE DRAWINGS

FIG. 1 shows an installation example of an image processing apparatus to which the invention is applied;

FIG. 2 shows a block diagram of the image processing apparatus;
FIG. 3 shows a general outline of a voting process;
FIG. 4 shows a flowchart of an inspection procedure;
FIG. 5 shows a flowchart of a model registration process;
FIG. 6 shows a flowchart of an initial search procedure;
FIG. 7 shows a flowchart of a detailed search procedure;
Fig. 8 shows a point corresponding to a model edge point and a setting example of a mask;
FIG. 9 shows a view for explaining a meaning of setting plural reference points;
FIG. 10 shows the case in which two coordinates of the reference point are necessarily computed;
FIG. 11 shows a computation method when two coordinates of the reference point are computed;
FIG. 12 shows a reference image and registration information which are used in a generalized Hough transform;
FIG. 13 shows a configuration example of a model table;
FIG. 14 shows an example of a process target image along with a relationship with a model edge point;
FIG. 15 shows a voting process in a conventional generalized Hough transform; and
FIG. 16 shows a voting process disclosed in the non-patent document.

DETAILED DESCRIPTION OF THE PREFERRED EMBODIMENTS

(1) Configuration of Image Processing Apparatus

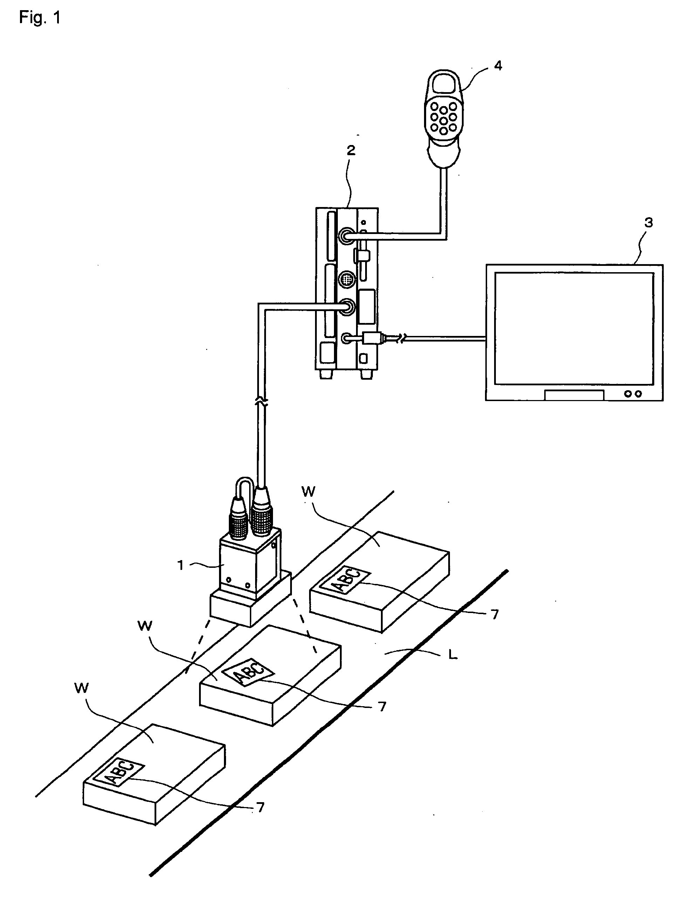

FIG. 1 shows an installation example of an image processing apparatus to which a preferred embodiment of the invention is applied. The image processing apparatus includes a camera 1, a controller 2, a monitor 3, and a console 4. In an inspection line L of a plant, the image processing apparatus sequentially images conveyed works W to generate images, and the image processing apparatus processes the image to judge whether a recognition object 7 (in the embodiment, a label in which character string "ABC" is printed) on the work W is acceptable or defective.

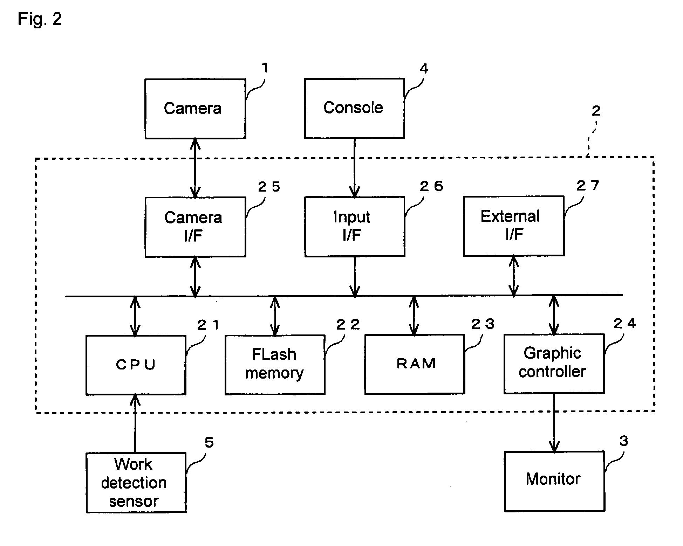

FIG. 2 shows an electric configuration of the image processing apparatus. The controller 2 includes CPU 21, a flash memory 22, RAM 23, a graphic controller 24, a camera interface 25, an input interface 26, and an external interface 27. The image processing apparatus is mainly controlled by CPU 21.

Programs and parameters necessary for processes are stored in the flash memory 22, and image data and half-computed result are tentatively stored in RAM 23. The camera interface 25 includes a drive circuit (not shown) of the camera 1, a buffer (not shown) for receiving an image signal, an A/D conversion circuit (not shown). The input interface 26 receives a signal from the console 4. The external interface 27 is used to perform communication with an external device (personal computer, PLC, and the like). The graphic controller 24 controls display on the monitor.

A work detection sensor 5 (photoelectric switch, proximity switch, and the like) is connected to CPU 21. When the sensor 5 inputs a signal for indicating that the work W is detected to CPU 21, CPU 21 drives the camera 1 using the camera interface 25, and CPU 21 causes the camera 1 to image the work W. Then, a gray-scale image (hereinafter referred to as "process target image") of the work W is generated and stored in RAM 23, and CPU 21 determines a position and a rotational angle of the recognition object 7 based on the program stored in the flash memory 22. By matching the image in the recognition object 7 to a previously registered reference partial image (cut out from the image which is obtained by imaging the model of the character string) based on the process result, CPU 21 judges whether or not defects such as position shift, dirt, and peeling are generated, CPU 21 judges whether or not a print state is appropriate in the character string, and CPU 21 judges whether or not the recognition object 7 is a different kind of label.

The controller 2 shown in FIGS. 1 and 2 is a dedicated apparatus developed for the image processing. However, the invention is not limited to the controller 2, but a personal computer in which an image processing program is installed may be used as the controller 2. In this case, the program is provided to the personal computer through a storage medium such as CD-ROM or a communication line. A panel type controller in which a monitor and an input unit are integrated may be used instead of the personal computer. The image processing apparatus of the embodiment is one which processes the monochrome gray-scale image. The color gray-scale image can also be generated and processed instead.

(2) Recognition Object Extraction Method

In the image processing apparatus of the embodiment, the process target image is generated in each work W, and the object recognizing process is performed to each process target image to extract the recognition object 7 using the generalized Hough transform. Similarly to the conventional technique, in order to perform the generalized Hough transform, it is necessary to perform the registration process with the reference image while the image obtained by imaging the model of the work W is set at the reference image. For example, a region including the character string "ABC" is specified in the labels on the reference image, and arbitrary one point of the in the region is set at the reference point. The plural edge points (points constituting outlines of the label and each character of A, B, and C) included in the specified region is extracted as the model edge point, and the angle $\alpha$ indicating the edge direction, the angle $\phi$ indicating the orientation with respect to the reference point, and the distance R from the reference point are computed and registered in RAM 23. In the embodiment, the angle $\alpha$, the angle $\phi$, and the distance R can be defined as in the case of the conventional example shown in FIG. 12, and the angle $\alpha$, the angle $\phi$, and the distance R can be registered in the table (hereinafter referred to as "model table ") having the same configuration shown in FIG. 13.

During the inspection, after the edge points are extracted from the process target image, the coordinate (X,Y) of the reference point O and the candidate value of the rotational angle $\Theta$ of the object are computed for each edge point using the registration information on the model edge point.

Specifically, assuming that (x,y) is the coordinate of an arbitrary edge point E on the process target image and $\beta$ is the angle indicating the edge direction of the edge point E, the coordinate (X,Y) and rotational angle $\Theta$ of the center point O are determined by the following equations (1) to (3).

$$X = R_i * cos(\phi_i + \beta) + x \qquad \cdots (1)$$

$$Y = R_i * \sin(\phi_i + \beta) + y \qquad \cdots (2)$$

$$\Theta = \beta - \alpha_i \qquad \cdots (3)$$

In the embodiment, the model edge points registered in the model table are caused to correspond sequentially to each edge point on the process target image, and N combinations of $(X,Y,\Theta)$ are determined by computing the equations (1) to (3). The computation method of itself is similar to the conventional generalized Hough transform. However, in the embodiment, the vote of the computed combination of $(X,Y,\Theta)$ is performed by the method different from the conventional one, which allows the recognition accuracy and the processing speed to be enhanced in the position and rotational angle of the recognition object 7.

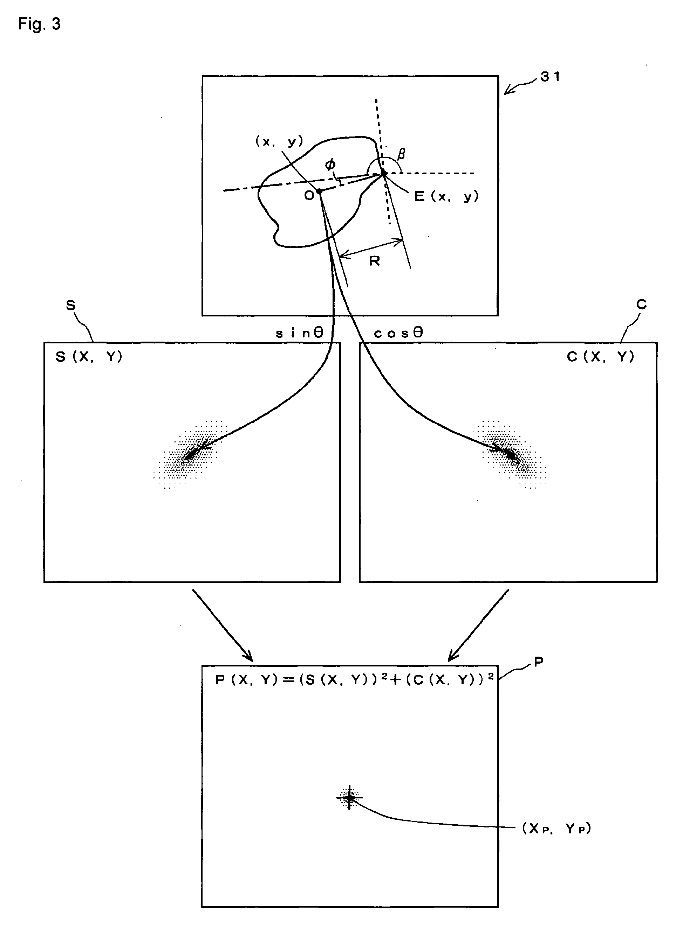

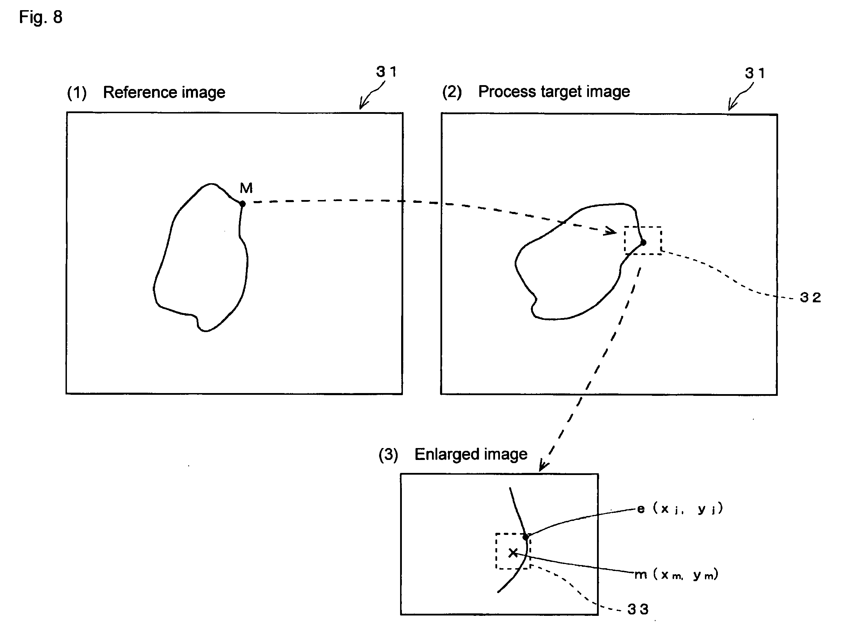

FIG. 3 schematically shows a projection process in the embodiment. In the description in FIGS. 3 and 8, it is assumed that a reference image 30 and process target image 31 similar to FIGS. 12 and 14 are processed.

Three kinds of voting planes S, C, and P are set in the embodiment. The planes S, C, and P are used to give the vote of numerical information for the coordinate $(X,Y)$ of the reference point based on the angle $\Theta$. Specifically, the planes S, C, and P is formed as two-dimensional arrays $S(X,Y)$, $C(X,Y)$, and $P(X,Y)$ whose arguments are the coordinate $(X,Y)$ respectively.

The vote is given for the planes S and C in each combination of the edge point on the process target image 31 and the model edge point. The votes of the sine value $\sin\Theta$ of the rotational angle $\Theta$ are given for the plane S, and the vote of the cosine value $\cos\Theta$ of the rotational angle $\Theta$ is given for the plane C. In the case where the value is already stored in the coordinate for which the value is voted, the current value is added to the already stored value. That is, in the planes S and C, a cumulative value of the voted values is stored in each coordinate computed as the reference point candidate.

On the other hand, the vote is given for the plane P when all the votes for the planes S and C are finished. The vote of a sum of squares $((S(x,y))^2 + (C(x,y))^2)$ of the values $S(X,Y)$ and $C(X,Y)$ stored in the same coordinates of the planes S and C is given for the plane P.

It is though that the sine value $\sin\Theta$ indicates a vertical component of a vector corresponding to the rotational angle $\Theta$ while the cosine value $\cos\Theta$ indicates a horizontal component of the vector. Therefore, it is thought that the cumulative values of the $\sin\Theta$ and $\cos\Theta$ correspond to the vertical component and horizontal component of a composite vector of the vector respectively. It is thought that the sum of squares P of the cumulative values indicates a length of the composite vector.

The length of the composite vector is increased as a variation (dispersion) is decreased in the direction of each composite vector.

Accordingly, in the voting process, the composite vector corresponding to one coordinate on the plane is also increased, as the dispersion of the angle $\Theta$ whose vote is given for the coordinate is decreased. At this point, unless the coordinate $(X,Y)$ corresponds to the correct coordinate of the reference point O, the dispersion of the angle $\Theta$ is increased in the votes even if the plural votes are given for the coordinate. As a result, it is thought that the composite vector is decreased. On the contrary, when the coordinate $(X,Y)$ is the correct coordinate of the reference point O, the dispersion of the angle $\Theta$ is extremely decreased in the votes. As a result, it is thought that the length of the composite vector becomes larger than that obtained in other coordinates.

In the embodiment, on the basis of the above discussion, a coordinate $(X_p, Y_p)$ at which the vote becomes the maximum value $P_{max}$ in the plane P is extracted as the of the reference point O in the process target image. Then, a gradient $\Theta_P$ of the composite vector is determined in the coordinate $(X_p, Y_p)$ by the following equation (4), and the gradient $\Theta_P$ is recognized as the rotational angle of the recognition object 7.

[Formula 1]

$$\Theta_P = \tan^{-1}\left(\frac{S(X_P, Y_P)}{C(X_P, Y_P)}\right) \qquad \cdots (4)$$

According to the voting process, because the faulty correspondence with the model edge point and the vote caused by the noise can be decreased, the coordinate of the reference point O and the correct value of the rotational angle Θ can stably be determined. Furthermore, because the voting process can be performed by the three kinds of voting planes, when compared with the conventional generalized Hough transform, the memory capacity for the voting process can be largely reduced to achieve the speedup of the process.

(3) Inspection

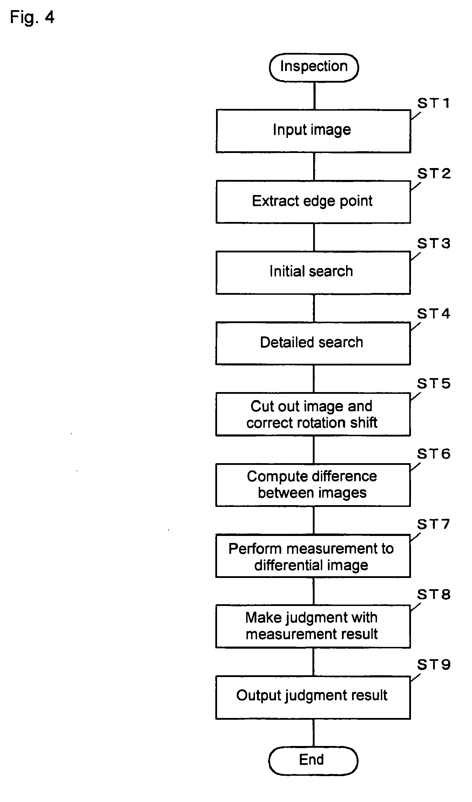

The flow of the inspection performed by the image processing apparatus will be described while focusing on a process of extracting the recognition object with the generalized Hough transform. FIG. 4 shows a procedure performed in the inspection by the controller 2 during the inspection.

In an initial ST 1 (STEP is abbreviated to "ST"), the process target image generated by the camera 1 and camera interface 25 is inputted to RAM 23.

In ST 2, the edge points are extracted on the process target image. Specifically, an edge extracting filter such as a Sobel operator is scanned on the process target image to extract the pixel whose magnitude of the density gradient is not lower than a predetermined value as the edge point. The coordinate of the extracted edge point and the magnitude of each of the density gradients $\Delta x$ and $\Delta y$ ($\Delta x$ is the magnitude of the density gradient in the horizontal direction and $\Delta y$ is the magnitude of the density gradient in the vertical direction) extracted by the edge extracting filter are stored in a predetermined area of RAM 23.

In ST 3, a process (hereinafter referred to as "initial search") of extracting the position and rotational angle of the recognition object 7 is performed by the method shown in FIG. 3. In ST 4, the position and rotational angle of the recognition object 7 are specified by a detailed search process (hereinafter referred to as "detailed search") with the result of the initial search. The detailed procedures will be described later.

In ST 5, the image including the recognition object 7 is cut out from the process target image based on the position and rotational angle determined by the detailed search, and the rotation shift of the image is corrected. In ST 6, a process of computing the difference from the reference partial image is performed to the post-correction image. The image (differential image) indicating the difference between the character string in the print region 7 and the character string of the model is generated by the differential computation process.

In ST 7, binarization and labeling are performed to the differential image to extract a pattern corresponding to the difference, and the position and area of the pattern are measured. In ST 8, the measurement value is compared to a predetermined threshold to judge whether the character string of the measuring object is acceptable or defective. In ST 9, the process is ended after the judgment result is outputted to the external device.

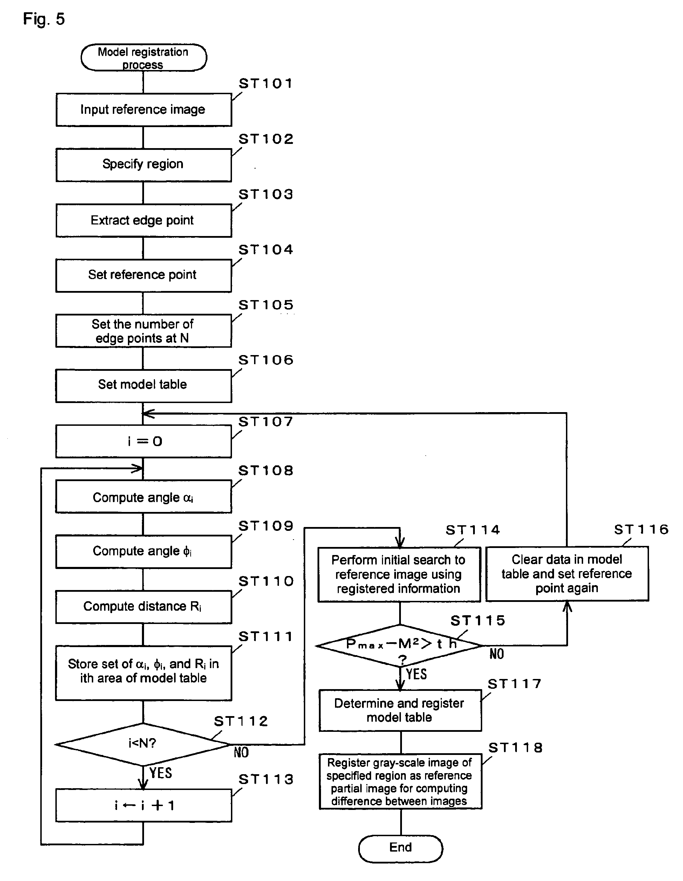

Then, the model registration process performed prior to the above inspection procedure will be described with reference to FIG. 5. In the process of FIG. 5, the reference partial image used for the differential computation process is registered along with the information on the model edge point used for the initial search and detailed search.

In ST 101, the reference image generated by imaging the model of the recognition object is inputted and stored in RAM 23. The input image is also displayed on the monitor 3.

A region specifying operation to the display screen of the monitor 3 is accepted in ST 102. In ST 103, the edge points are extracted for the image in the specified region by the method similar to ST 2 of FIG. 4.

In the case where the sufficient number of edge points is not extracted in ST 103 (not shown), it is desirable that the flow return to ST 102 to accept the region specifying operation again. In the case where the label shown in FIG. 1 is set at the recognition object, it is desirable to specify the region including only the character string "ABC" except for the outline of the label. This is because the edge points constituting the character outlines can be extracted by extracting the density gradient from a background of the label toward the character part.

In ST 104, the reference point is set. In this process, the specifying operation is also accepted from a user, and the specified coordinate can be set at the reference point. Alternatively, a gravity center of the model is automatically extracted using the edge extraction result of ST 103, and the gravity center may be set at the reference point.

In ST 105, the number of extracted edge points set at N. In ST 106, the model table having an area for N extracted edge points is set in RAM 23. The angle $\alpha_i$, the angle $\phi_i$, and the distance $R_i$ ($0<=i<=N-1$) are determined for each model edge point by performing the following STs 107 to 113, and the angle $\alpha_i$, the angle $\phi_i$, and the distance $R_i$ are registered in the model table. The angle $\alpha_i$, the angle $\phi_i$, and the distance $R_i$ are computed by the reference similar to that shown in the conventional example of FIG. 12.

When the registration is completed, a process of verifying whether or not the registered information is fit to extract the reference point O is performed. The reason why the process is provided is that, in the case where at least two edge points correspond to one model edge point, there is a possibility that the number of votes of the reference point O is decreased for the correct coordinate and this brings about a possibility of faulty extraction of the reference point O or the rotational angle Θ.

For example, in the case where the outline of the recognition object is a pattern which is symmetrical about a point, setting the center point at the reference point O orientates the vectors corresponding to the correct coordinate of the reference point O toward opposite directions in the two edge points which are symmetrical about a point, so that the vectors are canceled out with each other in a vector composite process to decrease the composite vector.

In order to solve the problem, in ST114, the initial search is performed to the reference image to determine the maximum value $P_{max}$ of the length of the composite vector. In ST 115, a difference between the maximum value $P_{max}$ and a predetermined permissible value $M^2$ is determined to check whether or not the difference is larger than a predetermined threshold th. When the value of $(P_{max}-M^2)$ is not more than th, the flow goes to ST 116. In ST 116, all the pieces of data are cleared in the model table, and a point different from the point set in ST 104 is set as the reference point O again. Then, the flow returns to ST 107, the registration process is performed for each model edge point again based on the newly set reference point O.

The permissible value $M^2$ is provided to deal with the case where the recognition object does not exist in the process target image. In the initial search, when the maximum value $P_{max}$ of the composite vector is smaller than the permissible value $M^2$, it is judged that the recognition object does not exist.

Accordingly, when the value of $(P_{max}-M^2)$ is more than th, it is thought that the coordinate of the reference point of the recognition object can be extracted with sufficient accuracy. In this case, the flow goes to ST 117, and the produced model table is determined and registered. In ST 118, the image in the region specified in ST 102 is cut out from the reference image, and the cut-out image is registered as the reference partial image for computing the difference between the images.

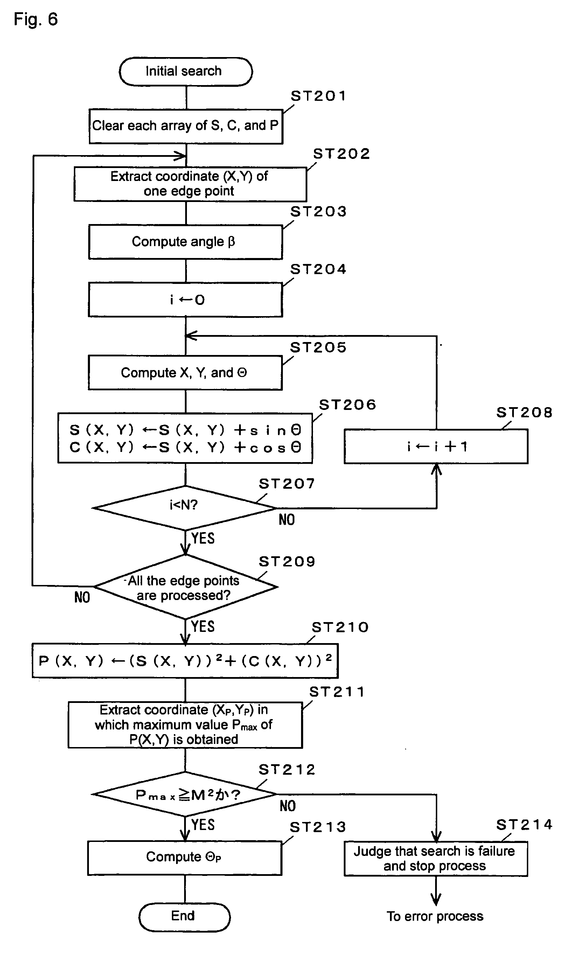

Then, the detailed initial search procedure will be described with reference to FIG. 6. In ST 201, the two-dimensional arrays constituting the three voting planes S, C, and P are initialized (cleared).

In ST 202, the coordinate (x,y) of one edge point on the process target image is extracted by focusing on the edge point. In ST 203, the angle β indicating the edge direction is computed using the magnitude of each of the density gradients Δx and Δy determined in extracting the edge point.

In ST 204, the initial value 0 is set at a counter i for specifying the model edge point. In ST 205, the pieces of registration information $R_i$, $\phi_i$, and $\alpha_i$ of the ith model edge point are read from the model table to compute the equations (1) to (3) along with the coordinate (x,y) and the angle β, which computes the coordinate (X,Y) and rotational angle Θ of the reference point. In ST 206, sinΘ and cosΘ are deed to S(X,Y) and C(X,Y) respectively.

Then, the corresponding model edge point is changed to repeat the processes of STs 205 and 206 by updating the counter i by one. When the process in which the (N-1)th model edge point is used is ended, the focused edge point of the process target image is changed, the flow returns to ST 202 to repeatedly perform the same processes. As a result, when the processes are ended for all the edge points in ST 209, the flow goes to ST210, the sum of squares of S(X,Y) and C(X,Y) is determined for each of all the coordinate of the planes S and C, and the sum of squares of S(X, Y) and C(X,Y) is stored in P(X,Y).

In ST 211, the coordinate $(X_P,Y_P)$ corresponding to the maximum value $P_{max}$ is extracted in P(X,Y). In ST 212, the maximum value $P_{max}$ is compared to the permissible value $M^2$. In the case of $P_{max}>=M^2$, the flow goes to ST 213, and the rotational angle $\Theta_P$ is computed by the equation (4).

On the other hand, $P_{max}<M^2$ is obtained in the case where the outline shape corresponding to the model is not included in the process target image.

In this case, the flow goes to ST 214. In ST 214, it is judged that the search is a failure, and the flow transfers to a predetermined error process.

Then, the detailed search will be described. In the detailed search of the embodiment, in order to determine more correctly the coordinate and rotational angle of the reference point O, the process in which the edge point in the restricted range of the process target image is performed in each model edge point using the result of the initial search.

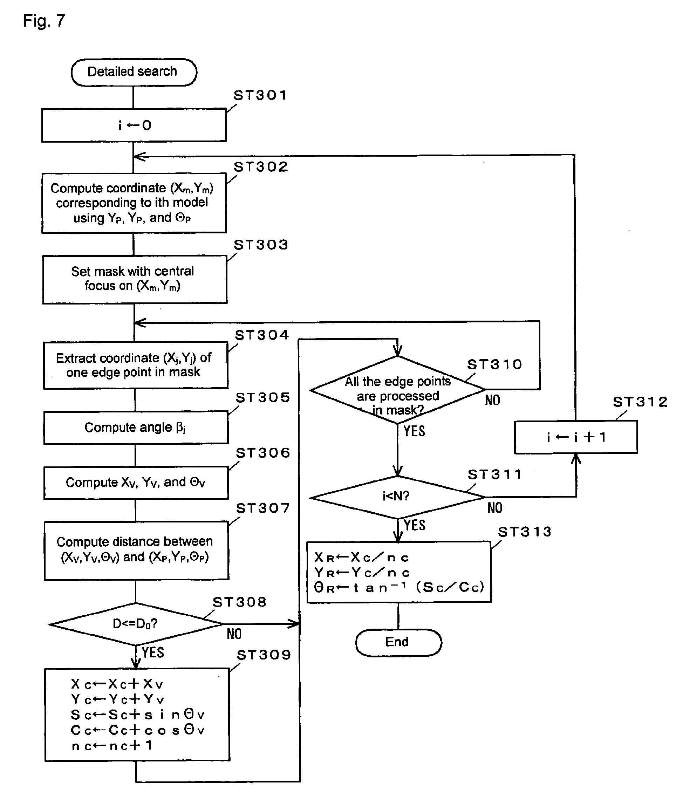

The procedure of the detailed search will specifically be described with reference to FIG. 7. In ST 301, the initial value 0 is set at the counter i for specifying the model edge point. In ST 302, a coordinate $(x_m,y_m)$ corresponding to the ith model edge point is determined from the following equations (5) and (6) using the coordinate $(X_P,Y_P)$ and rotational angle $\Theta_P$ which are determined in the initial search.

$$x_m = X_p + R_i * cos(\Theta_P - \phi_i) \quad \cdots \quad (5)$$

$$y_m = X_p + R_i * sin(\Theta_P - \phi_i) \quad \cdots \quad (6)$$

FIG. 8 shows a relationship between an arbitrary model edge point M on the reference image 30 and a corresponding point m on a process target image 31. FIG. 8C shows an enlarged view of the image of a region 32 including the corresponding point m in the process target image 31. Although the corresponding point m of FIG. 8 is not the edge point, it is thought that $(X_P,Y_P,\Theta_P)$ determined by the initial search has high reliability, so that it is thought that the edge point appropriate to the real corresponding point of the model edge point M exists near the corresponding point m. In the edge point near the real corresponding point, it is thought that the orientation with respect to the reference point O and the distance from the reference point O are approximated to those determined at the model edge point.

Therefore, a mask 33 including the corresponding point m and several pixels near the corresponding point m is set in the detailed search, and the coordinate and rotational angle of the reference point O are determined again for each edge point e included in the mask 33 by applying the registration information on each model edge point M.

Returning to FIG. 7, the above processes will specifically be described. The mask 33 is set in ST 303, and a coordinate $(x_j,y_j)$ of one edge point e in the mask 33 in ST 304. In ST 305, an angle $\beta_j$ indicating the edge direction is determined for the edge point e.

In ST306, a coordinate $(X_V,Y_V)$ and a rotational angle $\Theta_V$ of the reference point O are determined by computing the following equations (7) to (9) with the coordinate $(x_j,y_j)$, the angle $\beta_j$, and the registration information on the ith model edge point.

$$X_V = x_j + R_i * cos(\beta_j + \phi_i) \quad \cdots (7)$$

$$Y_V = y_j + R_i * sin(\beta_j + \phi_i) \quad \cdots (8)$$

$$\Theta_V = \beta_j - \alpha_i \quad \cdots (9)$$

As described above, it is though that the edge point e in the mask 33 is equal to the model edge point M with respect to the reference point O or has the relationship close to the model edge point M with respect to the reference point O, so that it is thought that the coordinate $(X_V,Y_V)$ and the rotational angle $\Theta_V$ are approximated to those computed for the real reference point with respect to the model edge point. However, the thought can be applied only to the edge point constituting the outline of the recognition object, but the thought is not applied to the coordinate $(X_V,Y_V)$ and rotational angle $\Theta_V$ which are determined from the noise component. Therefore, in the embodiment, $(X_V,Y_V,\Theta_V)$ determined in ST 306 and $(X_P,Y_P,\Theta_P)$ determined in the initial search are treated as one point in the three-dimensional space respectively, and a distance D between the points is determined to compare the distance D to a predetermined threshold $D_0$ (STs 307 and 308). When the distance D is more than the distance $D_0$, $(X_V,Y_V,\Theta_V)$ is excluded from the target of the computation in ST 309.

On the other hand, when the distance D is not more than the distance $D_0$, the flow goes to ST 309. In ST 309, the cumulative process is performed to the coordinate $(X_V,Y_V)$ using variables $X_c$ and $Y_c$, and the vector composing process similar to that performed to the voting planes S and C of the initial search is performed to the rotational angle $\Theta_V$ using variables $S_c$ and $C_c$. The sign $n_c$ designates a counter in which the number of processing time of ST 309 is stored.

Similarly, all the edge points e in the mask 33 are sequentially extracted to perform the processes from ST 304 to ST 309. When the processes are ended to the final edge point in the mask 33, the focused model edge point is changed to repeat the processes in ST 312. When the processes are performed to all the model edge points, the flow goes to ST 313, an average value is computed for the coordinate of the reference point O using the cumulative values $X_c$ and $Y_c$ and the number of processing times $n_c$, and the average value is set at the final value $(X_R,Y_R)$. For the rotational angle, the angle of the composite vector is determined using the variables $S_c$ and $C_c$, and the angle is set at the final value $\Theta_R$.

Thus, in the detailed search, the edge point which is of the process target is narrowed, and the average value of the coordinate of the reference point is determined on the condition that the computed value has a small variation. Therefore, the speedup can be achieved in process because the performance of the voting process with the plane is not required unlike the initial search. For each model edge point, the coordinate and the rotational angle are determined from the corresponding point and the edge point near the corresponding point, so that the finally computed $(X_R,Y_R,\Theta_R)$ has the accuracy higher than that of $(X_P,Y_P,\Theta_P)$ determined in the initial search.

In the initial search, because the processes of N cycles are necessarily performed in each edge point, there is a possibility that it takes a long time to perform the process in the case of the large noise component. In this case, even if the edge points which are of the process target in the initial search are thinned out to enhance the process speed, the computation accuracy can be secured by the subsequent detailed search.

(5) Other Embodiments

The following processes shown in a, b, c, and d can be performed in the image processing apparatus of the above embodiment.

a. Recognizing Process by Normalized Correlation

In the inspection procedure shown in FIG. 4, the computation of the difference between the images is performed after the coordinate $(X_R,Y_R)$ of the reference point O and the rotational angle $\Theta_R$ of the recognition object are specified by the initial search and the detailed search. Alternatively, a recognizing process may be performed by a normalized correlation operation instead of the process of the embodiment. In this case, the image corresponding to the reference partial image is cut out from the process target image to correct the rotation shift, and the normalized correlation operation is performed to the post-correction image with the reference partial image. Therefore, a degree of similarity can be determined for the reference partial image. The reference point of the reference partial image may also be matched to the coordinate $(X_R,Y_R)$ on the process target image to perform the normalized correlation operation after the reference partial image is corrected by the rotational angle $\Theta_R$. The plural kinds of reference partial images may also be registered to perform the normalized correlation operation in each reference partial image.

The above process is useful to the case where a degree of gray scale (in the case of color image, difference in color) is extracted in the recognition object. In the recognizing process by the generalized Hough transform, the difference in gray scale cannot be distinguished although the outline shape of the object can be extracted with high accuracy. On the other hand, in the search process by the conventional normalized correlation operation, it is necessary to scan the whole of process target image, and it is necessary to consider the rotation of the recognition object to perform the searches by the plural rotation model, which results in the problem that it takes a long time to perform the process. However, when the position and rotational angle of the recognition object are determined by the generalized Hough transform, the range where the normalized correlation operation is performed can be restricted and the production of the rotation model becomes unnecessary, so that the process time can largely shortened to perform the recognizing process with high accuracy.

b. Setting of Plural Reference Point

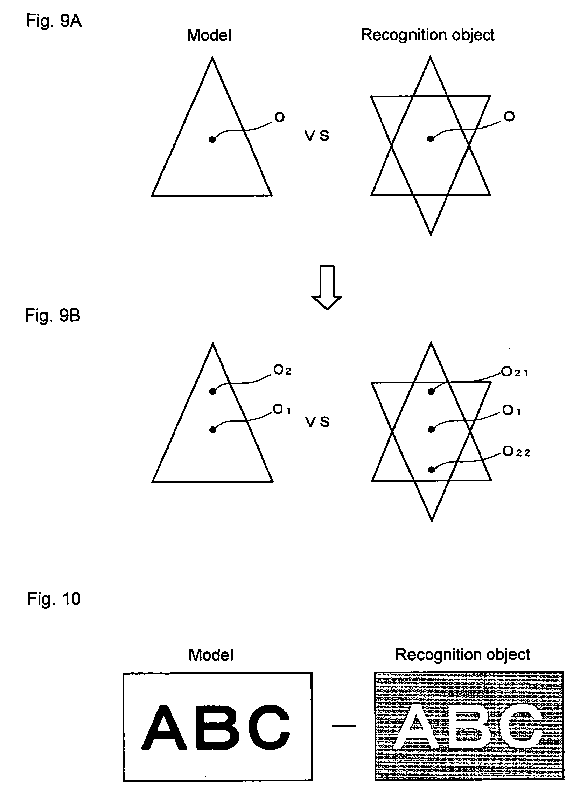

In the model registration process shown in FIG. 5, plural reference points may be set according to the shape of the recognition object. For example, as shown in FIG. 9A, in the case where the center point of the model is set at the reference point O for the model having a given shape, when the same shape as the model and the turn-around shape overlap each other to form the recognition object having the shape which is symmetrical to a point, as described above, the number of votes for the reference point O is decreased, and there is a possibility that the reference point O cannot correctly be extracted. Even if the reference point O can be extracted, it cannot be recognized that the two shapes corresponding to the model exist.

On the other hand, as shown in FIG. 9B, assuming that the center point of the model is a first reference point $O_1$ while a point separate away from the first reference point $O_1$ by a predetermined distance is a second reference point $O_2$, two reference point $O_{21}$ and $O_{22}$ can be extracted for the recognition object in addition to the reference point $O_1$. Therefore, the shape and attitude of the recognition object can be discriminated according to the positional relationship among the points with no mistake.

c. Method of Computing Two Coordinate of Reference Point O

For example, as shown in FIG. 10, when a contrasting relationship is reversed between the model and the recognition object, a density gradient direction in the edge point of the process target image is also orientated toward the opposite direction to the reference image. In this case, as shown in FIG. 11, it is necessary that the candidates of the candidate points $O_1$ and $O_2$ of the reference point be determined for each edge point E on the process target image in the directions which are rotated counterclockwise from the direction $h_1$ indicated by the angle $\beta$ and the reversal direction $h_2$ by the angle $\phi$ respectively.

In this case, each two sets of $(X,Y,\Theta)$ are determined for all the edge points to perform the voting process, and contents of $(X,Y,\Theta)$ corresponding to the direction different from the direction of the reference point O becomes different from one another in each edge point in the directions $h_1$ and $h_2$. Therefore, in the vote corresponding to the direction different from the direction of the reference point O, the composite vector having the length longer than the permissible value $M^2$ is not produced, and the correct coordinate and rotational angle of the recognition object can be determined in the direction of the reference point O.

In processing the color gray-scale image, it is necessary to perform the same process as FIG. 11. In order to extract the edge on the color gray-scale image, it is necessary to determine a color change amount (color difference) instead of the magnitude of density gradient. However, because the color difference is determined as the distance in the three-dimensional space having axes of color components R, G, and B, only the point at which the color change amount is large can be extracted as the edge point. Therefore, in the process target image in which the position of the reference point is unknown, because it cannot be specified which direction $h_1$ or $h_2$ the reference point exists, it is necessary to set both the directions at the process target.

d. Another Example of Voting Process

Although the sine value and cosine value of the rotational angle $\Theta$ are used for the vote in the above embodiment, the horizontal component and vertical component of the vector corresponding to the rotational angle $\Theta$ may be used for the vote. In this case, because the horizontal component and vertical component are expressed by the negative or positive value according to the rotational angle $\Theta$ respectively, similarly to the case shown in FIG. 3, the cumulative values of each component is determined in each coordinate (X,Y) for which the vote is given, and the position and rotational angle of the recognition object can be determined with high accuracy by the method of determining the sum of squares of the final values.

**Claims**

1. An object recognizing method, in which a plurality of model edge points constituting the model outline are individually focused on while a reference point coordinate is set using a reference image including a model having a predetermined outline shape,
a direction of a change in predetermined variable in a focused pixel is determined for the predetermined variable in one or a plurality of variables defining pixel information based on the predetermined variable with respect to the focused pixel and pixels around the focused pixel,
information indicating an edge direction which is of a direction corresponding to the change in direction, information indicating an orientation with respect to the edge direction of the reference point, and information indicating a distance from the reference point are registered,
when a gradient of the change in predetermined variable in the focused pixel is determined for the predetermined variable in the one or the plurality of variables defining the pixel information based on the predetermined variable with respect to the focused pixel and pixels around the focused pixel, an image including an edge point is set at a process target in the case where the focused pixel having the gradient larger than a predetermined value is set at the edge point, a coordinate and an edge direction of the edge point are determined for the plurality of edge points on the process target image,
when the plurality of model edge points are assumed to correspond to the edge points respectively, a process of computing the reference point coordinate defined from the registration information and an angle indicating a difference between the edge direction of the edge point and the edge direction of the model edge point is performed, and a voting process is performed based on computed each value, and
a position of the outline pattern corresponding to the model and a rotational angle of an outline pattern based on the model are recognized using the result of the voting process,
wherein, in the voting process, a vote of a vector corresponding to the angle computed along with the coordinate is given to the reference point coordinate determined in each model edge point for each edge point on the process target image, and numerical information indicating a composite vector of the voted vector is computed in each coordinate for which the vote is given, and
the coordinate in which a length of the composite vector exceeds a predetermined value or the coordinate corresponding to a predetermined number of vectors in the case where the composite vector are checked in the descending order of the length is extracted from the coordinates for which the vote is given using the numerical information according to ends of the voting process and the process of computing the numerical information indicating the composite vector, and the position and rotational angle of the outline pattern are recognized using the extraction result.

2. An object recognizing method according to claim 1, wherein, in the voting process, cosine and sine cumulative values of the rotational angle are determined in each coordinate for which the vote is given, and a sum of squares of the two kinds of cumulative values is computed as the length of the composite vector.

3. An object recognizing method according to claim 1, wherein, in the voting process, numerical information indicating an orientation and the length of each vector is determined in each coordinate for which the vote is given when the vector corresponding to the rotational angle is decomposed in horizontal and vertical directions, and a sum of squares of the two kinds of cumulative values is computed as the length of the composite vector.

4. An object recognizing method as in any one of claims 1 to 3, wherein, after a tentative position and a tentative rotational angle of the object are determined based on the numerical information indicating composite vector, a step a of determining a corresponding point on the process target image based on the tentative position and tentative rotational angle and a step b of computing the reference point coordinate and the angle indicating the difference in the edge direction for the edge point included in a local region including the corresponding point using the registration information on the model edge point are performed for each model edge point, the vectors indicating the rotational angles are composed while the reference point coordinates determined by the steps a and b are averaged for each model edge point, and the position and rotational angle of the object are recognized based on the coordinate of the averaged reference point and the angle indicating the composite vector.

5. An object recognizing method as in any one of claims 1 to 3, wherein, after the position and rotational angle of the outline pattern are recognized based on the coordinate which is extracted using the numerical information indicating composite vector, a normalized correlation operation on which the position and rotational angle of the outline pattern are reflected is performed using one or a plurality of gray-scale image models having outline shapes corresponding to the model.

6. An object recognizing method as in any one of claims 1 to 5, wherein, in the process of determining the reference point coordinate in each edge point on the process target image, each one of candidates of the reference point coordinate is computed in the registered orientation of the reference point with respect to the edge direction and a reversal orientation for each model edge point.

7. An object recognizing method as in any one of claims 1 to 6, wherein, after the reference point coordinate and the rotational angle in the edge direction are determined for each edge point on the reference image using the registration information on each model edge point on the condition that registration process is ended for each model edge point, the voting process and the process of computing the numerical information indicating the composite vector are performed, and the reference point is set at a different coordinate to perform the registration process for each model edge point again when the length of the composite vector indicated by the numerical information is shorter than a predetermined threshold in ending the vote for all the edge points.

8. An object recognizing method as in any one of claims 1 to 7, wherein a plurality of points having the different coordinates are set at the reference point, the process of determining the reference point coordinate and the voting process are performed in each reference point for the process target image.

9. An object recognition process program for setting a function of recognizing a position of an outline pattern corresponding to a model having a predetermined outline shape and a rotational angle of the outline pattern with respect to the model from a process target image to a computer having:

a function of individually focusing on a plurality of model edge points constituting the model outline while setting a reference point coordinate using a reference image including a model having a predetermined outline shape, of determining a direction of a change in predetermined variable in a focused pixel for the predetermined variable in one or a plurality of variables defining pixel information based on the predetermined variable with respect to the focused pixel and pixels around the focused pixel, and of registering information indicating an edge direction which is of a direction corresponding to the change in direction, information indicating an orientation with respect to the edge direction of the reference point, and information indicating a distance from the reference point; and a function of setting an image including an edge point at a process target in the case where the focused pixel having the gradient larger than a predetermined value is set at the edge point, and of determining a coordinate and an edge direction of the edge point for the plurality of edge points on the process target image, when a gradient of the change in predetermined variable in the focused pixel is determined for the predetermined variable in the one or the plurality of variables defining the pixel information based on the predetermined variable with respect to the focused pixel and pixels around the focused pixel, the object recognition process program for causing the computer to function as:

a candidate value computation device which computes the reference point coordinate defined in the case where each registered model edge point is assumed to correspond to the edge point and computes an angle indicating a difference between the edge direction of the edge point and the edge direction of the model edge point for the plurality of edge points on the process target image using registration information of each model edge point;

a storage device in which numerical information indicating a composite vector is stored when vectors corresponding to the angle computed by the candidate value computation device are composed in each coordinate;

an information update device which updates the numerical information, stored in the storage device, corresponding to the computed reference point coordinate using the computed angle every time the reference point coordinate and the angle are computed by the candidate value computation device;

an extraction device which extracts the coordinate in which a length of the composite vector exceeds a predetermined value or the coordinate corresponding to a predetermined number of vectors in the case where the composite vector are checked in the descending order of the length using the numerical information according to ends of processes performed by the candidate value computation device and information update device; and

a recognition device which recognizes the position and rotational angle of the outline pattern using the extraction result performed by the extraction device.

**10.** A storage medium in which the program according to claim 9 is stored.

**11.** An object recognizing apparatus comprising:

an image input device which inputs an image including an edge point in the case where a focused pixel whose gradient exceeds a predetermined value is set at the edge point, when the gradient of a change in predetermined variable in the focused pixel is determined for the predetermined variable in the one or the plurality of variables defining the pixel information based on the predetermined variable with respect to the focused pixel and pixels around the focused pixel;

a registration device which registers information indicating an edge direction which is of a direction corresponding to the change in direction, information indicating an orientation with respect to the edge direction of the reference point, and information indicating a distance from the reference point for a plurality of model edge points constituting the model outline while setting a reference point coordinate using a reference image, when the reference image including a model having a predetermined outline shape is inputted from the image input device;

a candidate value computation device which computes the reference point coordinate defined in the case where each registered model edge point is assumed to correspond to the edge point and computes an angle indicating a difference between the edge direction of the edge point and the edge direction of the model edge point for the plurality of edge points on the process target image using registration information of each model edge point, when a process target image is inputted from the image input device;

a storage device in which numerical information indicating a composite vector is stored when vectors corresponding to the angle computed by the candidate value computation device are composed in each coordinate;

an information update device which updates the numerical information, stored in the storage device, corresponding to the computed reference point coordinate using the computed angle every time the reference point coordinate and the angle are computed by the candidate value computation device;

an extraction device which extracts the coordinate in which a length of the composite vector exceeds a predetermined value or the coordinate corresponding to a predetermined number of vectors in the case where the composite vector are checked in the descending order of the length using the numerical information according to ends of processes performed by the candidate value computation device and information update device; and

a recognition device which recognizes a position of an outline pattern corresponding to the model and a rotational angle of the outline pattern with respect to the model using the extraction result performed by the extraction device.

Fig. 1

Fig. 2

Fig. 3

$P(X, Y) = (S(X, Y))^2 + (C(X, Y))^2$

Fig. 4

```
         ( Inspection )

               │
         ┌─────────────┐      ST1
         │ Input image │
         └─────────────┘
               │
         ┌──────────────────┐   ST2
         │ Extract edge point │
         └──────────────────┘
               │
         ┌────────────────┐     ST3
         │ Initial search │
         └────────────────┘
               │
         ┌─────────────────┐    ST4
         │ Detailed search │
         └─────────────────┘
               │
         ┌──────────────────┐   ST5
         │ Cut out image and │
         │ correct rotation shift │
         └──────────────────┘
               │
         ┌──────────────────┐   ST6
         │ Compute difference │
         │ between images    │
         └──────────────────┘
               │
         ┌──────────────────────┐  ST7
         │ Perform measurement to │
         │ differential image     │
         └──────────────────────┘
               │
         ┌──────────────────┐   ST8
         │ Make judgment with │
         │ measurement result │
         └──────────────────┘
               │
         ┌───────────────────────┐  ST9
         │ Output judgment result │
         └───────────────────────┘
               │
            (  End  )
```

Fig. 5

```
        ( Model registration
              process )
                  │
                  │                    ST101
        ┌─────────────────────┐
        │ Input reference image│
        └─────────────────────┘
                  │                    ST102
        ┌─────────────────────┐
        │   Specify region     │
        └─────────────────────┘
                  │                    ST103
        ┌─────────────────────┐
        │  Extract edge point  │
        └─────────────────────┘
                  │                    ST104
        ┌─────────────────────┐
        │  Set reference point │
        └─────────────────────┘
                  │                    ST105
        ┌─────────────────────┐
        │  Set the number of   │
        │  edge points at N    │
        └─────────────────────┘
                  │                    ST106
        ┌─────────────────────┐
        │   Set model table    │
        └─────────────────────┘
                  │                    ST107
        ┌─────────────────────┐
        │       i = 0          │
        └─────────────────────┘
                  │                    ST108
        ┌─────────────────────┐
        │  Compute angle αᵢ    │
        └─────────────────────┘
                  │                    ST109
        ┌─────────────────────┐
        │  Compute angle φᵢ    │
        └─────────────────────┘
                  │                    ST110
        ┌─────────────────────┐
        │  Compute distance Rᵢ │
        └─────────────────────┘
                  │                    ST111
        ┌─────────────────────┐
        │ Store set of αᵢ, φᵢ, │
        │ and Rᵢ in ith area   │
        │ of model table       │
        └─────────────────────┘
                  │                    ST112
              ╱ i<N? ╲──── NO
              ╲      ╱
                │ YES                   ST113
        ┌─────────────────────┐
        │     i ← i + 1        │
        └─────────────────────┘
```

$i = 0$

$i \leftarrow i + 1$

Compute angle $\alpha_i$

Compute angle $\phi_i$

Compute distance $R_i$

Store set of $\alpha_i$, $\phi_i$, and $R_i$ in ith area of model table

ST114 — Perform initial search to reference image using registered information

ST115 — $P_{max} - M^2 > t\,h$ ?  — NO

ST116 — Clear data in model table and set reference point again

ST117 — Determine and register model table

ST118 — Register gray-scale image of specified region as reference partial image for computing difference between images

End

Fig. 6

Initial search

ST201
Clear each array of S, C, and P

ST202
Extract coordinate (X,Y) of
one edge point

ST203
Compute angle β

ST204
i ← 0

ST205
Compute X, Y, and Θ

ST206
$S(X, Y) \leftarrow S(X, Y) + \sin\Theta$
$C(X, Y) \leftarrow S(X, Y) + \cos\Theta$

ST208
i ← i + 1

ST207
i<N?
NO

YES

ST209
All the edge points
are processed?
NO

YES

ST210
$P(X, Y) \leftarrow (S(X, Y))^2 + (C(X, Y))^2$

ST211
Extract coordinate $(X_P, Y_P)$ in
which maximum value $P_{max}$ of
P(X,Y) is obtained

ST212
$P_{max} \geqq M^2$か?
NO

YES

ST213
Compute $\Theta_P$

ST214
Judge that search is failure
and stop process

End

To error process

Fig. 7

```
              ┌─────────────────────┐
              │  Detailed search    │
              └──────────┬──────────┘
                         │           ST301
              ┌──────────┴──────────┐
              │        i ← 0        │
              └──────────┬──────────┘
                         │◄───────────────────────────────────┐
                         │           ST302                     │
              ┌──────────┴──────────┐                          │
              │ Compute coordinate  │                          │
              │ (Xm,Ym) correspond- │                          │
              │ ing to ith model    │                          │
              │ using YP, YP, and ΘP │                          │
              └──────────┬──────────┘                          │
                         │           ST303                     │
              ┌──────────┴──────────┐                          │
              │  Set mask with      │                          │
              │  central focus on   │                          │
              │  (Xm,Ym)            │                          │
              └──────────┬──────────┘                          │
                         │◄────────────────────────────┐       │
                         │           ST304             │       │
              ┌──────────┴──────────┐       ST310       │       │
              │ Extract coordinate  │      ◄────┐       │       │
              │ (Xj,Yj) of one edge │    ╱ All the ╲     │       │
              │ point in mask       │   ╱ edge points╲   │       │
              └──────────┬──────────┘  ╱ are processed╲──┘  NO   │
                         │           ╲  in mask?    ╱           │
                         │  ST305      ╲          ╱     ST312    │
              ┌──────────┴──────────┐    ╲  YES ╱     ┌─────────┴───┐
              │   Compute angle βj   │       │        │  i ← i + 1  │
              └──────────┬──────────┘       │        └─────────┬───┘
                         │  ST306           ▼                  │
              ┌──────────┴──────────┐    ╱ i<N? ╲   ST311       │
              │ Compute Xv, Yv, and Θv│  ╱        ╲─────────────┘
              └──────────┬──────────┘  ╲        ╱     NO
                         │  ST307        ╲    ╱
              ┌──────────┴──────────┐     ╲YES╱
              │ Compute distance    │       │        ST313
              │ between (Xv,Yv,Θv)   │  ┌────┴────────────────┐
              │ and (XP,YP,ΘP)       │  │ XR ← Xc ╱ nc        │
              └──────────┬──────────┘  │ YR ← Yc ╱ nc        │
                         │ ST308        │ ΘR ← tan⁻¹ (Sc╱Cc)  │
                      ╱ D<=D₀? ╲  NO    └────┬────────────────┘
                     ╲        ╱───────►      │
                      ╲      ╱          ┌────┴────┐
                       ╲YES╱           │   End   │
                         │  ST309       └─────────┘
              ┌──────────┴──────────┐
              │ Xc ← Xc + Xv        │
              │ Yc ← Yc + Yv        │
              │ Sc ← Sc + sin Θv    │
              │ Cc ← Cc + cos Θv    │
              │ nc ← nc + 1         │
              └─────────────────────┘
```

23

Fig. 8

(1)  Reference image                          3 1

(2)  Process target image                      3 1

3 2

(3)  Enlarged image

e $(x_i, y_i)$

m $(x_m, y_m)$

3 3

EP 1 783 663 A2

Fig. 9A

Model            Recognition object

Fig. 9B

Fig. 10

Model            Recognition object

Fig. 11

Fig. 12

Fig. 13

| Number of model edge point | Distance from model edge point to reference point | Orientation with respect to reference point | Edge direction |
|---|---|---|---|
| 0 | $R_0$ | $\phi_0$ | $\alpha_0$ |
| 1 | $R_1$ | $\phi_1$ | $\alpha_1$ |
| $\vdots$ | $\vdots$ | $\vdots$ | $\vdots$ |
| i | $R_i$ | $\phi_i$ | $\alpha_i$ |
| $\vdots$ | $\vdots$ | $\vdots$ | $\vdots$ |
| $N-1$ | $R_{N-1}$ | $\phi_{N-1}$ | $\alpha_{N-1}$ |

Fig. 14

Fig. 15

Fig. 16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **FUMIHIKO SAITO.** Extraction of rotational graphic by generalized Hough transform with two-dimensional parameter space. *Journal of the Institute of Image electronics Engineers of Japan,* April 1996, vol. 25 (2), 130-137